# EUROPEAN PATENT APPLICATION

(11) **EP 4 699 670 A1**
(43) Date of publication of application: **25.02.2026**
(21) Application number: 25192030.2
(22) Date of filing: 28.07.2025
(51) Int. Cl.: A62C 3/16, A62C 35/02, A62C 35/13

(54) **ENERGY STORAGE SYSTEM**

(30) Priority: 20.08.2024 KR 20240111378
(71) Applicant: SAMSUNG SDI CO., LTD., Yongin-si, Gyeonggi-do 17084 (KR)
(72) Inventor: YOON, Jongwook, 17084 Yongin-si, Gyeonggi-do (KR)
(74) Representative: Gulde & Partner

(57) **Abstract**

An energy storage system (10) includes a plurality of battery modules (110) each including a plurality of batteries (115), a main spray tank (200) including a first fire extinguishing agent, a pipe portion (300) connecting the main spray tank (200) to the plurality of battery modules (110), and an additional spray tank (400) arranged in a certain area of the pipe portion (300) between the plurality of battery modules (110) and the main spray tank (100). The additional spray tank (400) includes a second fire extinguishing agent.

## Description

### FIELD

The disclosure relates to an energy storage system.

### BACKGROUND

Energy storage systems may refer to systems that may store surplus electricity or store electricity produced by using renewable energy. Energy storage systems may be used to smoothly control power supply and demand by storing idle power during times of low electricity demand and supplying electricity during times of high electricity demand.

Spaces or facilities in which energy storage systems are installed and operated may be provided with equipment for suppressing battery fires caused by occurrence of fires due to electric shocks, short circuits, external surges, and the like. General fire extinguishing systems include fire detection sensors, sprinklers installed around battery racks, on ceilings, or the like, fire extinguishing agent sprays, and the like.

### SUMMARY

According to various embodiments, an energy storage system is provided to suppress and extinguish a fire.

However, aspects and features of the disclosure are not limited to those described below, and other aspects and features not mentioned will be clearly understood by those skilled in the art from the detailed description.

According to some embodiments, an energy storage system includes a plurality of battery modules each including a plurality of batteries, a main spray tank including a first fire extinguishing agent, a pipe portion connecting the main spray tank to the plurality of battery modules, and an additional spray tank arranged in a certain area of the pipe portion between the plurality of battery modules and the main spray tank. The additional spray tank includes a second fire extinguishing agent.

The additional spray tank may include a spray portion to spray the second fire extinguishing agent into the pipe portion, a tank portion accommodating the second fire extinguishing agent, and a fluidizer passing through between the spray portion and the tank portion to adjust the spray of the second fire extinguishing agent.

The spray portion may include a vent portion that ruptures when the first fire extinguishing agent is sprayed from the main spray tank. The vent portion may block an end portion of the spray portion.

The tank portion may include a first tank neck portion defining a tank hole communicating between the tank portion and the spray portion, and a diameter of the fluidizer may correspond to a diameter of the tank hole.

The fluidizer may include a stopper and a plug portion. A diameter of the stopper may be greater than a diameter of the tank hole and less than a diameter of the tank portion, and a diameter of the plug portion may correspond to the diameter of the tank hole.

The plug portion may further include a spring portion extending in a longitudinal direction of the plug portion in a center of the plug portion. The spring portion may be fixed to a second tank neck portion, and a diameter of the spring portion may be less than the diameter of the plug portion.

The second tank neck portion may include a spring fixing portion to which the spring portion is connected, and a plurality of grid lines connecting the spring fixing portion to a diameter of the second tank neck portion.

The pipe portion may include a main pipe, a branch pipe, and a spray pipe. The additional spray tank may be arranged in a certain area of the main pipe.

The additional spray tank may spray the second fire extinguishing agent after the main spray tank has completely depleted the first fire extinguishing agent.

The main spray tank may further include an inert gas.

According to some embodiments, an energy storage system includes a plurality of battery modules each including a plurality of batteries, a main spray tank including a first fire extinguishing agent and an inert gas, a pipe portion connecting the main spray tank to the plurality of battery modules, and an additional spray tank arranged in a certain area of the pipe portion and including a second fire extinguishing agent. The first fire extinguishing agent and the inert gas are sequentially sprayed, and the second fire extinguishing agent is sprayed together with the inert gas.

The additional spray tank may include a spray portion to spray the second fire extinguishing agent into the pipe portion, a tank portion accommodating the second fire extinguishing agent, and a fluidizer passing between the spray portion and the tank portion to adjust the spray of the second fire extinguishing agent.

The spray portion may include a vent portion that ruptures when the first fire extinguishing agent is sprayed from the main spray tank. The vent portion may block an end portion of the spray portion.

The tank portion may include a tank neck portion defining a tank hole communicating between the tank portion and the spray portion. The fluidizer may correspond to the tank hole.

The fluidizer may include a stopper and a plug portion, a diameter of the stopper may be greater than a diameter of the tank hole and less than a diameter of the tank portion, and a diameter of the plug portion may correspond to the diameter of the tank hole.

The plug portion may further include a spring portion extending in a longitudinal direction of the plug portion in a center of the plug portion. The spring portion may be fixed to a second tank neck portion, and a diameter of the spring portion may be less than a diameter of the plug portion.

The second tank neck portion may include a spring fixing portion to which the spring portion is connected, and a plurality of grid lines connecting the spring fixing portion to a diameter of the second tank neck portion.

The additional spray tank may be arranged in a certain area of the pipe portion between the plurality of battery modules and the main spray tank.

The pipe portion may include a main pipe, a branch pipe, and a spray pipe, and the additional spray tank may be arranged in a certain area of the main pipe.

The additional spray tank may spray the second fire extinguishing agent after the main spray tank has completely depleted the first fire extinguishing agent.

### BRIEF DESCRIPTION OF THE DRAWINGS

The following drawings attached to the specification illustrate embodiments of the present disclosure, and further describe aspects and features of the present disclosure together with the detailed description of the present disclosure. Therefore, the disclosure should not be construed as being limited to the drawings.
FIG. 1 illustrates aspects of a fire extinguishing system of an energy storage system, according to some embodiments;
FIG. 2 is an enlarged view of an area A indicated in FIG. 1;
FIG. 3 is a cross-sectional view of a cross-section taken along a line I-I' of an area B indicated in FIG. 2;
FIG. 4 is a cross-sectional view of a cross-section taken along a line II-II' indicated in FIG. 3;
FIG. 5 is a cross-sectional view of a cross-section taken along line I-I' in area B, indicated in FIG. 2, immediately after a fire extinguishing agent is sprayed from a main spray tank;
FIG. 6 is a cross-sectional view of a cross-section taken along line I-I' in area B, indicated in FIG. 2, in the latter half of spray of a fire extinguishing agent from a main spray tank; and
FIG. 7 is a graph showing a change in pressure associated with a fire extinguishing agent over spray time in an energy storage system.

### DETAILED DESCRIPTION

Hereinafter, embodiments will be described fully with reference to the attached drawings, and when describing with reference to the drawings, the same or corresponding components will be given the same reference numerals. As those skilled in the art would realize, the described embodiments may be modified in various different ways, all without departing from the disclosure or scope of the claims. The drawings and description are to be regarded as illustrative in nature and not restrictive.

As the energy density of batteries continuously increases, amounts of flames and ejection pressure in vents of battery cells increase, and thus, fires may not be early extinguished or suppressed with general fire suppression facilities. Accordingly, described herein are embodiments of fire extinguishing systems that may effectively suppress a plurality of battery fires and early extinguish high-pressure fires, in energy storage systems.

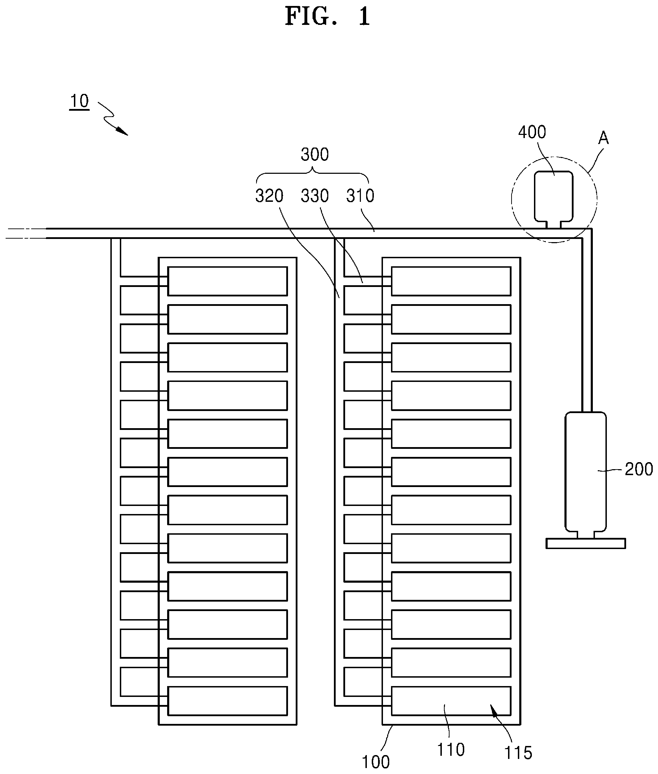

FIG. 1 illustrates aspects of a fire extinguishing system of an energy storage system, according to some embodiments.

An energy storage system (ESS) 10 may refer to a system that may produce and store electricity, and may supply electricity and control power supply and demand to be smooth. An energy storage system 10 may include a plurality of battery modules 110 each including a plurality of batteries 115, and thus, may cause a fire and be vulnerable to the fire.

Referring to FIG. 1, the energy storage system 10 having a fire extinguishing system, according to some embodiments, may include at least one battery rack 100 each including a plurality of battery modules 110, a main spray tank 200 including a first fire extinguishing agent, a pipe portion 300 for moving a fire extinguishing agent or the like to the battery modules 110, and an additional spray tank 400 arranged in a certain area of the pipe portion 300 and including a second fire extinguishing agent.

The energy storage system 10 may include one or more battery racks 100, the battery racks 100 may each include a plurality of battery modules 110, and the battery modules 110 may each include a plurality of battery cells. Each battery cell may be constituted as a secondary battery that may be charged and sprayed.

The plurality of battery modules 110 may be stacked in one direction, for example, in a vertical direction, within the battery rack 100. The battery modules 110 may be connected in series, parallel, or series-parallel to generate a set output.

The battery module 110 may include a plurality of battery cells arranged in one direction. As an example, the plurality of battery cells may be arranged in one or more rows within the battery module 110. The plurality of battery cells may be electrically connected to each other and may be connected to each other in various ways such as series, parallel, or serial-parallel.

The main spray tank 200 may accommodate the first fire extinguishing agent, and may be connected to the pipe portion 300 to supply the first fire extinguishing agent to the battery cells of the battery module 110. As an example, when a valve of the main spray tank 200 is opened through a separate valve, the main spray tank 200 may supply the first fire extinguishing agent to a main pipe 310 of the pipe portion 300, and the first fire extinguishing agent may pass through a branch pipe 320 from the main pipe 310 and be sprayed into the battery cells within the battery module 110 through a spray pipe 330.

The main spray tank 200 may refer to a tank that stores the first fire extinguishing agent and may be fixed to an installation location by using a package method or a wall-mounted method. The main spray tank 200 may refer to, for example, a pressure container that stores the first fire extinguishing agent at high pressure. The first fire extinguishing agent may be stored in the main spray tank 200 in an accumulated pressure or pressurized method. Internal pressure of the main spray tank 200 may vary according to an environment, such as a type of the first fire extinguishing agent.

The first fire extinguishing agent accommodated in the main spray tank 200 may include all of a gas-based fire extinguishing agent such as trifluoromethane (HFC-23, CHF3), pentafluoroethane (HFC-125, C2HF5), or heptafluoropropane (HFC227ea, CF3CHFCF3), and a commonly used fire extinguishing agent such as dodecafluoro-2-methylpentane-3-one (CF3CF2C(0)CF(CF3)2) or water.

Meanwhile, the main spray tank 200 may include not only the first fire extinguishing agent but also an inert gas, or an inert gas which is a gas that does not react with the first fire extinguishing agent. The main spray tank 200 may include, for example, a nitrogen gas. The inert gas may be accommodated in the main spray tank 200 at high pressure. A space may be efficiently used by including the first fire extinguishing agent and the inert gas in one main spray tank 200. The main spray tank 200 may release only the first fire extinguishing agent when an event such as thermal runaway occurs in a battery cell and then start spraying the inert gas after the first fire extinguishing agent is consumed.

As an example, in the case where the main spray tank 200 includes the first fire extinguishing agent in a liquid state and the inert gas in a gaseous state, a straw-shaped pipe may extend in the main spray tank 200 to near the bottom inside the main spray tank 200, and thus, the inert gas may be sprayed after the first fire extinguishing agent in the liquid state is first sprayed into the pipe portion 300. As an example, the first fire extinguishing agent, which is in the liquid state in the main spray tank 200, may change into a gaseous state while being sprayed into the pipe portion 300.

As another example, in the case where the main spray tank 200 includes the first fire extinguishing agent in a compressed gaseous state and the inert gas in a liquid state, which does not react with the first fire extinguishing agent, the inert gas may be sprayed after the first fire extinguishing agent at high pressure in an upper portion of the main spray tank 200 is first sprayed into the pipe portion 300. As an example, the inert gas, which is in the liquid state in the main spray tank 200, may change into a gaseous state while being sprayed into the pipe portion 300.

However, as the first fire extinguishing agent in the main spray tank 200 is exhausted, spray pressure of the first fire extinguishing agent may decrease over time, and accordingly, a spray amount of the first fire extinguishing agent may also decrease. As a result, a fire extinguishing effect may decrease over time, and thus, the risk of occurrence of an additional fire may increase.

In addition, the inert gas may have a lower fire extinguishing capability than the first fire extinguishing agent, and thus, in the case where the first fire extinguishing agent is consumed in the main spray tank 200 and only the inert gas is sprayed, the risk of occurrence of an additional fire may increase.

The pipe portion 300 may connect the main spray tank 200 to the battery module 110 within the battery rack 100. In an embodiment, the pipe portion 300 may connect the main spray tank 200 to a plurality of battery cells of the battery module 110.

The pipe portion 300 may include the main pipe 310 connected to the main spray tank 200, the branch pipe 320 branching from the main pipe 310 to each battery rack 100, and the spray pipe 330 extending from the branch pipe 320 to the battery module 110 or to a plurality of batteries 115 within the battery module 110.

The main pipe 310, the branch pipe 320, and the spray pipe 330 may all have shapes of hollow pipes.

The main pipe 310 may have an end connected to the main spray tank 200 and may extend therefrom to pass sides of or near all battery racks 100 within the energy storage system 10, and thus, the other end thereof may be connected to the branch pipe 320. Accordingly, when the valve of the main spray tank 200 is opened, the first fire extinguishing agent may be moved up to the vicinity of the battery rack 100 to which the first fire extinguishing agent is to be supplied. In addition, the main pipe 310 may be a passage through which a second fire extinguishing agent sprayed from an additional spray tank 400 moves. The main pipe 310 may be connected to the additional spray tank 400 and may be, for example, connected to an outer wall of a spray portion 410.

The branch pipe 320 may branch from the main pipe 310, and may extend in a direction in which the battery modules 110 are stacked in the battery rack 100, to be connected to the spray pipe 330. The branch pipe 320 may provide a path through which a fire extinguishing agent or the like moving along the main pipe 310 up to the vicinity of the battery rack 100, is delivered up to the vicinity of all battery modules 110 within one battery rack 100.

As an example, a valve may be formed between the main pipe 310 and the branch pipe 320, and the valve may be opened to allow the fire extinguishing agent or the like to flow only into the branch pipe 320 branching to the battery rack 100 including a battery module 110 in which an event such as thermal runaway occurs.

The spray pipe 330 may connect the branch pipe 320 to the battery module 110. As another example, the spray pipe 330 may connect the branch pipe 320 to a plurality of battery cells within the battery module 110. The spray pipe 330 may spray a fire extinguishing agent or the like within the branch pipe 320 into the battery module 110 and, in another embodiment, into a plurality of battery cells within the battery module 110.

As an example, a valve may be formed between the branch pipe 320 and the spray pipe 330, and the valve may be opened to allow a fire extinguishing agent or the like to flow into the corresponding battery module 110 and/or battery cell in which an event, such as thermal runaway, occurs and battery cells near the same. As another example, the spray pipe 330 may melt near the corresponding battery module 110 and/or battery cell in which the event such as thermal runaway occurs, to cause the fire extinguishing agent to be sprayed. In another method, the fire extinguishing agent or the like within the branch pipe 320 may be sprayed through the spray pipe 330 into the battery module 110 and/or battery cell in which the event such as thermal runaway occurs.

However, in the case where the first fire extinguishing agent in the main spray tank 200 is sprayed through the pipe portion 300 into a battery cell in which an event such as a fire occurs, a spray pressure and spray amount of the first fire extinguishing agent may gradually decrease over time, and thus, an extinguishing capability may decrease.

The additional spray tank 400 may accommodate the second fire extinguishing agent, and after the first fire extinguishing agent in the main spray tank 200 is sprayed, additionally spray the accommodated second fire extinguishing agent to prevent the fire extinguishing capability of the energy storage system 10 from decreasing. As an example, the additional spray tank 400 may spray the second fire extinguishing agent after the main spray tank 200 has completely depleted the first fire extinguishing agent.

The additional spray tank 400 may store, for example, the second fire extinguishing agent without pressure, and may be opened and closed by internal pressure of the main pipe 310 without an electrical signal.

The additional spray tank 400 may be arranged in a certain area of the pipe portion 300 between the main spray tank 200 and the battery rack 100, in particular, a plurality of battery modules 110. The additional spray tank 400 may be arranged in a certain area of the main pipe 310. In other words, the additional spray tank 400 may be installed in the main pipe 310 between the plurality of battery cells and the main spray tank 200.

The second fire extinguishing agent accommodated within the additional spray tank 400 may include all of a gas-based fire extinguishing agent such as trifluoromethane (HFC-23, CHF3), pentafluoroethane (HFC-125, C2HF5), or heptafluoropropane (HFC227ea, CF3CHFCF3), and a commonly used fire extinguishing agent such as dodecafluoro-2-methylpentane-3-one (CF3CF2C(0)CF(CF3)2) or water. As an example, the second fire extinguishing agent accommodated within the additional spray tank 400 may be the same as the first fire extinguishing agent accommodated within the main spray tank 200.

A detailed structure of the additional spray tank 400 and a spray method of the second fire extinguishing agent are described in detail below.

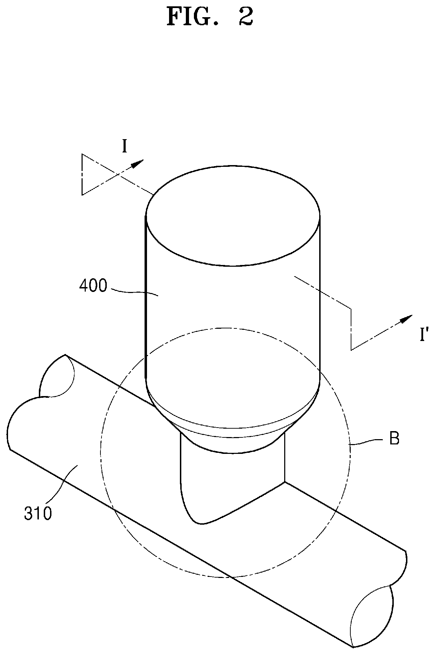

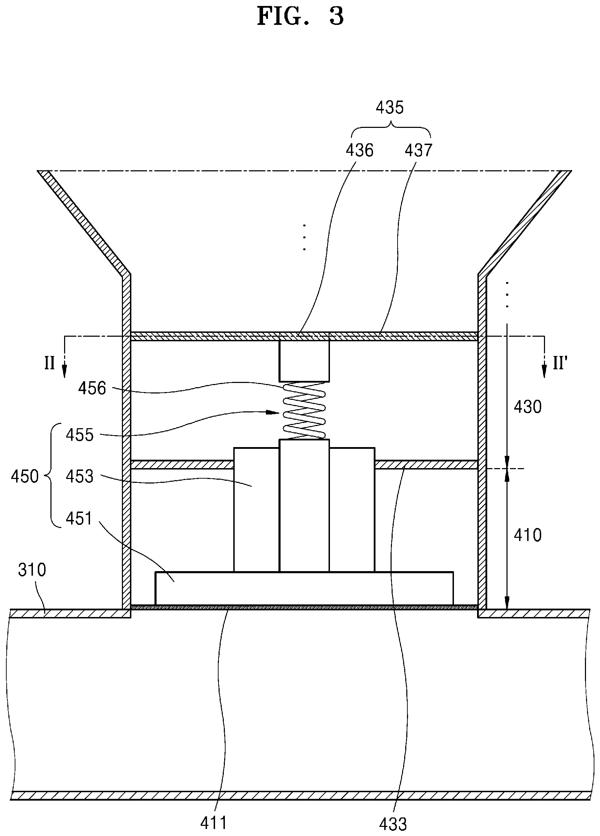

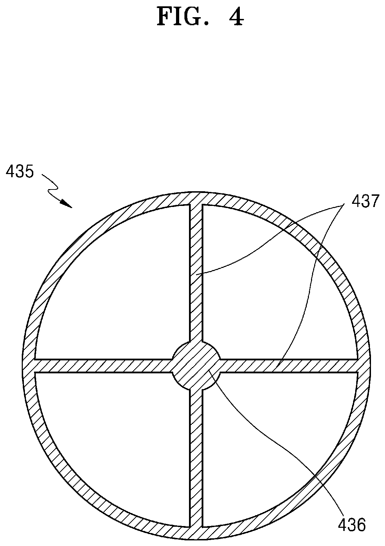

FIG. 2 is an enlarged view of an area A indicated in FIG. 1, FIG. 3 is a cross-sectional view of a cross-section taken along a line I-I' of an area B indicated in FIG. 2, and FIG. 4 is a cross-sectional view of a cross-section taken along a line II-II' of FIG. 3.

Referring to FIGS. 2 and 3, the additional spray tank 400 accommodating the second fire extinguishing agent may be connected to a certain area of the main pipe 310 of the pipe portion 300.

The additional spray tank 400 may include a spray portion 410 for spraying the second fire extinguishing agent to the pipe portion 300, a tank portion 430 for accommodating the second fire extinguishing agent, and a fluidizer 450 that passes between the spray portion 410 and the tank portion 430 and adjusts the spray of the second fire extinguishing agent.

The spray portion 410 may include a vent portion 411 that ruptures when the first fire extinguishing agent is sprayed from the main spray tank 200. The vent portion 411 may block an end portion of the spray portion 410.

A wall surface of the spray portion 410 may be connected to the pipe portion 300. An outer wall of the spray portion 410 in the additional spray tank 400 may be connected to the main pipe 310 of the pipe portion 300.

The additional spray tank 400 may be usually blocked by the vent portion 411 and thus may not communicate with the main pipe 310. After the vent portion 411 is ruptured by pressure when the first fire extinguishing agent is sprayed from the main spray tank 200, the additional spray tank 400 and the main pipe 310 may communicate with each other. As an example, when pressure within the main pipe 310 is 3 bar or more, the vent portion 411 may be ruptured to allow the additional spray tank 400 and the main pipe 310 to communicate with each other.

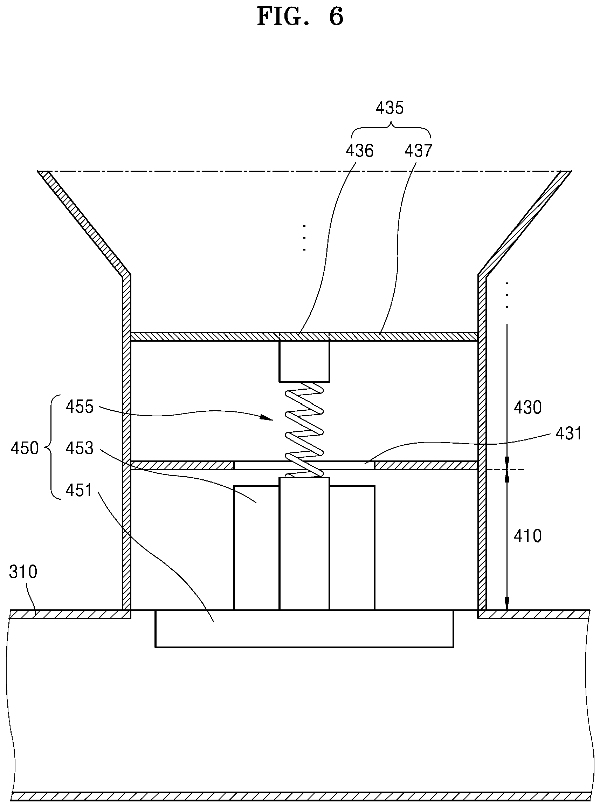

When the first fire extinguishing agent in the main spray tank 200 is exhausted and thus the fluidizer 450 descends, the second fire extinguishing agent accommodated in the tank portion 430 may flow into the spray portion 410 through a tank hole 431 (FIG. 6) of the tank portion 430 and be sprayed into the main pipe 310.

Referring to FIGS. 3 and 4, the tank portion 430 may accommodate the second fire extinguishing agent in the additional spray tank 400. The tank portion 430 may include the tank hole 431, a first tank neck portion 433, and a second tank neck portion 435.

The tank portion 430 may include the first tank neck portion 433 defining the tank hole 431 communicating between the tank portion 430 and the spray portion 410. The tank hole 431 may be a hole through which the fluidizer 450 may pass, and a diameter of the tank hole 431 may correspond to a diameter of the fluidizer 450 and, more particularly, may correspond to a diameter of a plug portion 453.

When pressure decreases due to consumption of the first fire extinguishing agent in the main spray tank 200, the fluidizer 450 may descend and thus the second fire extinguishing agent within the tank portion 430 may flow into the spray portion 410 through the tank hole 431 blocked by the fluidizer 450.

The first tank neck portion 433 may define the tank hole 431 that is a hole through which the second fire extinguishing agent in the tank portion 430 flows into the spray portion 410. The first tank neck portion 433 may have a closed neck structure so that the tank hole 431 is usually blocked by the fluidizer 450 to prevent the second fire extinguishing agent from flowing into the spray portion 410 and to distinguish spaces of the tank portion 430 and the spray portion 410 from each other. In other words, unlike the second tank neck portion 435, the first tank neck portion 433 may be a blocked portion which does not have a grid line and thus through which the second fire extinguishing agent may not pass.

The first tank neck portion 433 may be formed to be spaced apart from the vent portion 411 that is in contact with the pipe portion 300. Also, the first tank neck portion 433 may be located between the vent portion 411 and the second tank neck portion 435.

Referring to FIG. 4, the second tank neck portion 435 formed to be spaced apart from the first tank neck portion 433 may include a spring fixing portion 436 and a plurality of grid lines 437.

The spring fixing portion 436 may be located in the center of the second tank neck portion 435 and may fix an upper portion of a spring portion 455 of the fluidizer 450 to the second tank neck portion 435. The spring fixing portion 436 may be stably fixed to the second tank neck portion 435 even in the case where the fluidizer 450 moves up and down, to allow the second fire extinguishing agent to normally flow.

The second tank neck portion 435 may include the plurality of grid lines 437 for fixing the spring fixing portion 436 to the additional spray tank 400. As an example, at least three grid lines 437 may be provided so that the spring fixing portion 436 to which the fluidizer 450 is attached is stably fixed to the additional spray tank 400.

The grid line 437 may branch from the spring fixing portion 436 and extend in a direction perpendicular to a longitudinal direction of the spring portion 455 to be connected to a wall surface of the additional spray tank 400. In other words, a plurality of grid lines 437 may connect the spring fixing portion 436 to a diameter of the second tank neck portion 435.

The second tank neck portion 435 may fix the spring portion 455 of the fluidizer 450, but the second fire extinguishing agent needs to flow through the second tank neck portion 435, and thus, unlike the first tank neck portion 433, the second tank neck portion 435 may have an open neck structure. In other words, the second tank neck portion 435 may define an agent passage section pierced to allow the second fire extinguishing agent to flow by the plurality of grid lines 437 that connect the spring fixing portion 436 in the center to the wall surface of the additional spray tank 400.

The fluidizer 450 for adjusting spray of the second fire extinguishing agent may be formed to pass between the spray portion 410 and the tank portion 430. The fluidizer 450 may include a stopper 451, the plug portion 453, and the spring portion 455.

The stopper 451 may be a component that is usually contact with the vent portion 411 and may move up and down in the spray portion 410 while the first fire extinguishing agent is sprayed from the main spray tank 200.

The first fire extinguishing agent may be sprayed from the main spray tank 200. The vent portion 411 may be ruptured by pressure due to the first fire extinguishing agent, and then the second fire extinguishing agent in the spray portion 410 may be sprayed into the main pipe 310. A diameter of the stopper 451 may be less than a diameter of the vent portion 411. In other words, the second fire extinguishing agent in the additional spray tank 400 may flow between the stopper 451 and an inner wall of the additional spray tank 400 in the spray portion 410 and be sprayed into the main pipe 310.

However, in the early time of the spray of the first fire extinguishing agent from the main spray tank 200, the stopper 451 of the fluidizer 450 may rise due to spray pressure of the first fire extinguishing agent. Here, the diameter of the stopper 451 may be greater than the diameter of the tank hole 431 to prevent the stopper 451 from entering the tank portion 430.

The plug portion 453 may usually block the tank hole 431 to prevent the second fire extinguishing agent in the tank portion 430 from flowing into the spray portion 410. The plug portion 453 may be formed on the stopper 451 and may move up and down together with the stopper 451 when the stopper 451 moves up and down while the first fire extinguishing agent is sprayed from the main spray tank 200. In addition, the spring portion 455 extending in a longitudinal direction of the plug portion 453 may be arranged in the center of an inside of the plug portion 453.

The diameter of the plug portion 453 may correspond to the diameter of the tank hole 431 so that the plug portion 453 usually blocks the tank hole 431 to prevent the second fire extinguishing agent from flowing into the spray portion 410. Also, the diameter of the plug portion 453 may be less than the diameter of the stopper 451.

As the spray pressure of the first fire extinguishing agent decreases in the latter half of the spray of the first fire extinguishing agent from the main spray tank 200, the plug portion 453 may descend and thus an upper surface of the plug portion 453 may be lower than the first tank neck portion 433, and accordingly, the second fire extinguishing agent within the tank portion 430 may flow between the first tank neck portion 433 and the plug portion 453 into the spray portion 410.

The spring portion 455 may be fixed to the second tank neck portion 435 and include a spring 456. An upper end of the spring portion 455 may be fixed to the second tank neck portion 435, a certain area of a side surface of a lower end of the spring portion 455 may be surrounded by the plug portion 453, and a bottom surface of the lower end of the spring portion 455 may be fixed to the stopper 451. The upper end and the lower end of the spring portion 455 may be connected to each other by the spring 456.

The second tank neck portion 435 may be fixed to the wall surface of the additional spray tank 400 and may not move, and thus, the upper end of the spring portion 455 connected to the second tank neck portion 435 may be fixed and may not move. In contrast, the lower end of the spring portion 455, connected to the upper end of the spring portion 455 by the spring 456, may be moved by the spring 456.

In other words, the spring 456 of the spring portion 455 may be compressed or relaxed by pressure at which the first fire extinguishing agent is sprayed from the main spray tank 200. In detail, as the spring 456 of the spring portion 455 is compressed or relaxed, the lower end of the spring portion 455, the plug portion 453, and the stopper 451, which are connected by the spring 456 of the spring portion 455, may integrally move up and down.

The spring portion 455 may be arranged in the center of the inside of the plug portion 453 and may extend in the longitudinal direction of the plug portion 453. The side surface of the lower end of the spring portion 455 may be surrounded by the plug portion 453, and thus, the diameter of the spring portion 455 may be less than the diameter of the plug portion 453.

The bottom surface of the lower end of the spring portion 455 may be fixed to the upper surface of the stopper 451. However, the lower end of the spring portion 455 may move up and down by the spring 456 of the spring portion 455 and spray the second fire extinguishing agent in the tank portion 430 to the spray portion 410.

Embodiments of a method of increasing a fire extinguishing effect of the energy storage system 10 by additionally spraying the second fire extinguishing agent from the additional spray tank 400 are described.

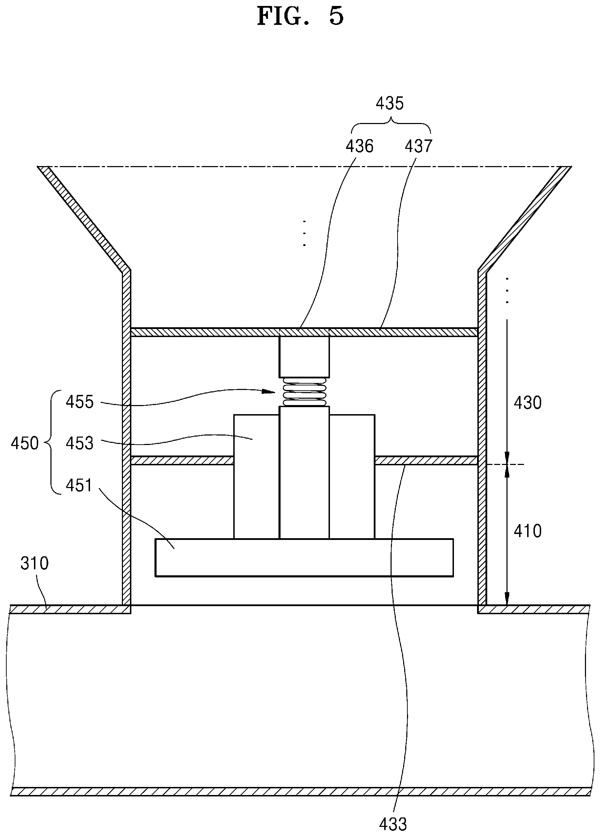

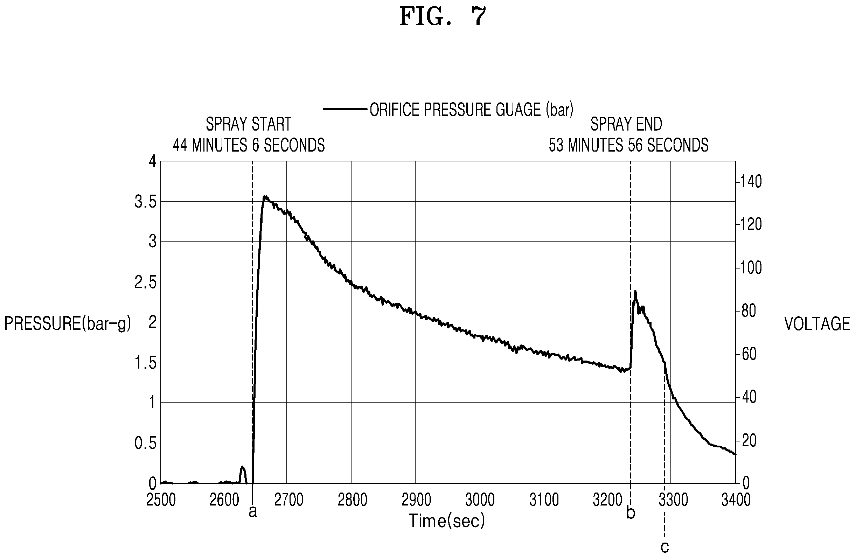

FIG. 5 is a cross-sectional view of a cross-section taken along line I-I' in area B, indicated in FIG. 2, immediately after a fire extinguishing agent from a main spray tank. FIG. 6 is a cross-sectional view of a cross-section taken along line I-I' in area B, indicated in FIG. 2, in the latter half of spray of the fire extinguishing agent from the main spray tank, and FIG. 7 is a graph showing a change in pressure associated with a fire extinguishing agent over spray time in an energy storage system 10.

When an event such as occurrence of a fire occurs in a battery cell in the energy storage system 10, the first fire extinguishing agent may be sprayed from the main spray tank 200. Spray pressure may be high in the early time of the spray of the first fire extinguishing agent of the main spray tank 200, but as time elapses, the first fire extinguishing agent may approach exhaustion and the spray pressure may decrease, and thus, an extinguishing effect may decrease. The additional spray tank 400 may improve the extinguishing effect of the energy storage system 10 by additionally spraying the second fire extinguishing agent when the first fire extinguishing agent is exhausted from the main spray tank 200. As an example, the additional spray tank 400 may spray the second fire extinguishing agent after the main spray tank 200 has completely depleted the first fire extinguishing agent.

FIG. 5 is a cross-sectional view illustrating the additional spray tank 400 connected to the main pipe 310 in the early time of spray of the first fire extinguishing agent from the main spray tank 200.

In the case where the first fire extinguishing agent is sprayed from the main spray tank 200 for the first time, the spray pressure of the first fire extinguishing agent may be high, and thus, the vent portion 411 of the additional spray tank 400, shown in FIG. 3, may be ruptured, and the spring portion 455 of the fluidizer 450 may be compressed by the pressure of the first fire extinguishing agent. As an example, the vent portion 411 may be ruptured when internal pressure of the main pipe 310 is 3 bar or more.

Even in the case where the spring portion 455 is compressed, the plug portion 453 may still block the tank hole 431, and thus, the second fire extinguishing agent of the tank portion 430 may not flow out into the spray portion 410. As an example, in a duration in which spray of the first fire extinguishing agent from the main spray tank 200 starts and thus the pressure decreases from a point at which the internal pressure of the main pipe 310 is about 3.5 bar to a point at which the internal pressure of the main pipe 310 is about 1.5 bar, the upper surface of the plug portion 453 may not descend below a surface in the first tank neck portion 433 after the fluidizer 450 rises. Thus, the second fire extinguishing agent of the tank portion 430 may not flow into the spray portion 410.

FIG. 6 is a cross-sectional view illustrating the additional spray tank 400 connected to the main pipe 310 in the latter half of the spray of the first fire extinguishing agent from the main spray tank 200.

In the case where the first fire extinguishing agent approaches exhaustion in the main spray tank 200, pressure of the main pipe 310 may be lowered, and thus, the spring of the fluidizer 450 may be relaxed and the fluidizer 450 may extend. In other words, lower ends of the stopper 451, the plug portion 453, and the spring portion 455 may descend integrally.

As the plug portion 453 descends, the upper surface of the plug portion 453 may be lowered than the surface of the first tank neck portion 433, the second fire extinguishing agent in the tank portion 430 may flow between the first tank neck portion 433 and the plug portion 453 into the spray portion 410.

The second fire extinguishing agent flowing into the spray portion 410 may flow between the additional spray tank 400 and the stopper 451 and be sprayed into the main pipe 310. As an example, from a point in time at which internal pressure of the main pipe 310 becomes about 1.5 bar or less after the first fire extinguishing agent is exhausted in the main spray tank 200 and the inert gas is sprayed, the upper surface of the plug portion 453 may be at a lower location than the surface of the first tank neck portion 433, and thus, the fluidizer 450 may descend so that the second fire extinguishing agent in the tank portion 430 flows into the spray portion 410.

The second fire extinguishing agent in the additional spray tank 400 may be sprayed together from after the start of spray of the inert gas from the main spray tank 200. The additional spray tank 400 may additionally spray the second fire extinguishing agent from when pressure inside the pipe portion 300 is a certain pressure or less. As an example, the additional spray tank 400 may additionally spray the second fire extinguishing agent from when the pressure inside the main pipe 310 is 1.5 bar or less.

When, from the main spray tank 200, all the first fire extinguishing agent is sprayed and the inert gas is sprayed, the second fire extinguishing agent may be additionally sprayed from the additional spray tank 400 into the pipe portion 300 to move up to a batter module 110 and battery cell in which an event such as a fire occurs. In other words, when all the first fire extinguishing agent is sprayed from the main spray tank 200 and thus only the inert gas having a lower extinguishing capability than the first fire extinguishing agent is supplied, the additional spray tank 400 may be provided to additionally spray the second fire extinguishing agent and thus increase the extinguishing capability of the energy storage system 10.

FIG. 7 is a graph illustrating pressure change over time while a first fire extinguishing agent in a liquid state and an inert gas at high pressure are sprayed in an energy storage system 10.

From a point a, the first fire extinguishing agent may be sprayed from the main spray tank 200. In other words, a duration a to b may refer to a duration in which the first fire extinguishing agent is sprayed from the main spray tank 200. As shown in FIG. 5, in the early time of the duration a to b, the fluidizer 450 of the additional spray tank 400 may rise due to the internal pressure of the main pipe 310 and thus may not spray the second fire extinguishing agent within the additional spray tank 400 into the main pipe 310. In the latter half of the duration a to b, as the first fire extinguishing agent is consumed in the main spray tank 200, the internal pressure of the main pipe 310 may decrease and the fluidizer 450 that rises may descend. However, even until this time, the fluidizer 450 may descend only until the upper surface of the plug portion 453 is located at a higher point than the surface of the first tank neck portion 433.

At a point b, the first fire extinguishing agent in the main spray tank 200 may be exhausted and the inert gas may start to be sprayed. In other words, from the point b, only the inert gas may be sprayed from the main spray tank 200 and the inert gas in a liquid state or the inert gas at high pressure may be sprayed from the main spray tank 200 into the main pipe 310, and thus, pressure may briefly reach a peak immediately after the point b, as shown. The inert gas may have a less extinguishing capability against a fire in a battery cell than the first fire extinguishing agent, and thus, the second fire extinguishing agent may be additionally sprayed from the additional spray tank 400.

From a point c, the second fire extinguishing agent may start to be additionally sprayed from the additional spray tank 400. Even after the point c, the inert gas may continue to be sprayed from the main spray tank 200, and due to the resulting pressurization, the additional spray tank 400 may additionally spray the second fire extinguishing agent. The point c may be, for example, a point at which the internal pressure of the main pipe 310 is 1.5 bar or less.

As shown in FIG. 7, from the point c, as the internal pressure of the main pipe 310 falls, the fluidizer 450 of the additional spray tank 400 may descend so that the upper surface of the plug portion 453 is located lower than the surface of the first tank neck portion 433, and thus, the second fire extinguishing agent within the additional spray tank 400 may be sprayed through the tank hole 431 into the main pipe 310.

In other words, by solving a decrease issue in a spray amount and spray pressure in the latter half, which is caused by only spray of the first fire extinguishing agent from the main spray tank 200, and a spray issue of only the inert gas having a lower fire extinguishing capability than the first fire extinguishing agent after exhaustion of all the first fire extinguishing agent by additionally spraying the second fire extinguishing agent from the additional spray tank 400, the fire extinguishing capability of the energy storage system 10 may be improved. Accordingly, heat transfer, from a battery cell of a battery module 110 in which an event such as a fire occurs, to adjacent battery cells may be prevented and additional thermal runaway may be prevented or delayed, and thus, a secondary accident may be prevented.

According to embodiments, when a fire occurs in an energy storage system 10, a fire extinguishing agent in a main spray tank 200 may be sprayed and then a fire extinguishing agent may be additionally sprayed from an additional spray tank 400 to increase a fire extinguishing capability and prevent a secondary accident.

However, the effects that may be obtained through the disclosure are not limited to those described above, and other technical effects not mentioned herein will be clearly understood from the description by those skilled in the art.

Various aspects of an energy storage system and a fire extinguishing system for an energy storage system are described in the following examples with reference to the aspects provided herein. One or more or all aspects described herein with reference to an energy storage system and/or a fire extinguishing system may be part of a method for operating an energy storage system and/or a method for operating a fire extinguishing system of an energy storage system. It is noted that the fire extinguishing system can be used for other systems that may need fire protection in the same or similar way.

Example 1 is a fire extinguishing system including a main spray tank including a first fire extinguishing agent; a pipe portion (e.g., a pipe arrangement including one or more pipes) for connecting the main spray tank of the fire extinguishing system to one or more devices to be fire protected (e.g., to one or more battery modules of an energy storage system). The fire extinguishing system further includes an additional spray tank including a second fire extinguishing agent and configured to feed (e.g., to spray) the second fire extinguishing into the pipe portion.

Another Example 1 is a fire extinguishing system including: a main spray tank including a first fire extinguishing agent; a pipe portion for connecting the main spray tank to one or more devices to be fire protected (e.g., to one or more battery modules of an energy storage system); and an additional spray tank arranged in an (certain) area of the pipe portion between the one or more devices to be fire protected (e.g., to one or more battery modules of an energy storage system) and the main spray tank, wherein the additional spray tank includes a second fire extinguishing agent.

In Example 2, the fire extinguishing system of Example 1 may optionally further include that the additional spray tank includes a spray portion configured to spray the second fire extinguishing agent into the pipe portion.

In Example 3, the fire extinguishing system of Example 1 or 2 may optionally further include that the additional spray tank includes a tank portion accommodating the second fire extinguishing agent.

In Example 4, the fire extinguishing system of Examples 2 and 3 may optionally further include that the additional spray tank includes a fluidizer passing through between the spray portion and the tank portion. In some aspects, the fluidizer may be configured to adjust the spray of the second fire extinguishing agent. In some aspects, the fluidizer may be configured to adjust a flow of the second fire extinguishing agent into the pipe portion.

In Example 5, the fire extinguishing system of Example 2 (or in additional combination with Examples 3 or 4) may optionally further include that the spray portion includes a vent portion configured to block an end portion of the spray portion.

In Example 6, the fire extinguishing system of Example 5 may optionally further include that the vent portion is configured to rupture in the case that the first fire extinguishing agent is sprayed from the main spray tank.

In Example 7, the fire extinguishing system of Example 5 or 6 may optionally further include that the vent portion is configured to rupture upon a pressure in the pipe portion exceeds a predefined first pressure. The predefined first pressure may be associated with an initial operation pressure of the main spray tank for spraying the first fire extinguishing agent into the pipe portion such that the vent portion ruptures in the case that the first fire extinguishing agent is sprayed from the main spray tank.

In Example 8, the fire extinguishing system of Examples 2 and 3 (or in additional combination with any one of Examples 4 to 7) may optionally further include that the tank portion includes a first tank neck portion defining a tank hole communicating between the tank portion and the spray portion. In some aspects, a diameter of the fluidizer may correspond to (e.g., may fit to or may be the same as) a diameter of the tank hole.

In Example 9, the fire extinguishing system of Example 8 may optionally further include that the fluidizer includes a stopper and a plug portion. In some aspects, a diameter of the stopper may be greater than a diameter of the tank hole and less than a diameter of the tank portion. In some aspects, a diameter of the plug portion may correspond to (e.g., may fit to or may be the same as) the diameter of the tank hole.

In Example 10, the fire extinguishing system of Example 9 may optionally further include that the plug portion includes a spring portion (e.g., extending in a longitudinal direction of the plug portion in a center of the plug portion). In some aspects, the spring portion may be fixed to a second tank neck portion. In some aspects, a diameter of the spring portion may be less than the diameter of the plug portion.

In Example 11, the fire extinguishing system of Example 10 may optionally further include that the second tank neck portion includes: a spring fixing portion to which the spring portion is connected; and a plurality of grid lines connecting the spring fixing portion to a diameter of the second tank neck portion.

In Example 12, the fire extinguishing system of Example 10 or 11 may optionally further include that a spring of the spring portion is configured to define a movement of the fluidizer such that a flow of the second fire extinguishing agent into the pipe portion is prevented at a predefined first pressure (e.g., a pressure at which the vent portion is configured to rupture, e.g., at an initial operation pressure of the main spray tank for spraying the first fire extinguishing agent into the pipe portion) and that a flow of the second fire extinguishing agent into the pipe portion is allowed at a predefined second pressure lower than the first pressure (e.g., at an operation pressure of the main spray tank at which the first fire extinguishing agent is partially or completely consumed).

In Example 13, the fire extinguishing system of any one of Examples 1 to 12 may optionally further include that the pipe portion includes a main pipe, a branch pipe, and a spray pipe. In some aspects, the additional spray tank may be arranged in an (certain) area of the main pipe. In some aspects, the branch pipe may be arranged between the spray pipe and the main pipe. In some aspects, the additional spray tank may be arranged (with reference to the pipe portion) closer to the spray pipe (or closer to the one or more devices to be fire protected) than the main spray tank.

In Example 14, the fire extinguishing system of any one of Examples 1 to 13 may optionally further include that the additional spray tank is configured (e.g., via the fluidizer) to spray the second fire extinguishing agent after the main spray tank has at least partially (e.g., partially or completely) depleted the first fire extinguishing agent.

In Example 14, the fire extinguishing system of any one of Examples 1 to 13 may optionally further include that the main spray tank further includes an inert gas. In some aspects, the inert gas of the main spray tank causes a flow of the second fire extinguishing agent from the additional spray tank through the pipe portion.

In Example 15, the fire extinguishing system of Example 14 may optionally further include that the fire extinguishing system is configured such that the first fire extinguishing agent and the inert gas are sequentially sprayed and that the second fire extinguishing agent is sprayed together with the inert gas.

In Example 16, the fire extinguishing system of any one of Examples 1 to 15 may optionally further include that the fire extinguishing system is configured such that the first fire extinguishing agent and the second fire extinguishing agent are sequentially sprayed. The second fire extinguishing agent is sprayed after the first fire extinguishing agent is sprayed. The second fire extinguishing agent may be sprayed after the first fire extinguishing agent is at least partially consumed (e.g., after at least portion of the first fire extinguishing agent is sprayed through the pipe portion to the one or more devices to be fire protected in case of a fire event.

Example 17 is an energy storage system including: a plurality of battery modules each including a plurality of batteries; and a fire extinguishing system in accordance with any one of Examples 1 to 16, wherein the pipe portion connects the main spray tank of the fire extinguishing system to the plurality of battery modules.

In some aspects of an Example 18, a fire extinguishing system in accordance with any one of Examples 1 to 16 may be used to fire protect an energy storage system. The energy storage system may include one or more battery modules each including a plurality of batteries.

In Example 19, a method for operating a fire extinguishing system in accordance with any one of Examples 1 to 16 may include: spraying the first fire extinguishing agent and the second fire extinguishing agent sequentially. The second fire extinguishing agent may be sprayed after the first fire extinguishing agent is sprayed. The second fire extinguishing agent may be sprayed after the first fire extinguishing agent is at least partially consumed (e.g., after at least portion of the first fire extinguishing agent is sprayed through the pipe portion to the one or more devices to be fire protected in case of a fire event.

In Example 20, a method for operating an energy storage system of Example 17 may include: spraying the first fire extinguishing agent and the second fire extinguishing agent sequentially. The second fire extinguishing agent may be sprayed after the first fire extinguishing agent is sprayed. The second fire extinguishing agent may be sprayed after the first fire extinguishing agent is at least partially consumed (e.g., after at least portion of the first fire extinguishing agent is sprayed through the pipe portion to the one or more devices to be fire protected in case of a fire event.

As used herein, "comprise, include" and/or "comprising, including" specify the existence of the aforementioned shapes, figures, steps, operations, elements, components, and/or groups, and do not exclude the existence or addition of one or more other shapes, figures, operations, elements, components, and/or groups. Also, when describing embodiments, "~ may do" or "~ may be" may include "one or more embodiments".

In addition, in order to help understand of the disclosure, the attached drawings are not shown to actual scale, but dimensions of some components may be exaggerated. Also, the same reference numerals may be assigned to the same components in different embodiments.

The reference that two targets to be compared are "the same" means that the two targets are "substantially the same". Therefore, substantially the same may include deviations considered to be low in the art, for example, deviations within 5 %. In addition, uniformity of any parameter over a certain area may indicate that the parameter is uniform from an average point of view.

Although the terms first, second, etc. are used herein to describe various components, these components are not limited by these terms. These terms are only used to distinguish one component from another component, and unless otherwise specifically stated, and a first component may also be a second component.

Throughout the description, unless otherwise specifically stated, each element may be singular or plural.

Any component being disclosed "above (or below)" a component or "on (or underneath) a component may indicate that any component is not only disposed in contact with an upper surface (or a lower surface) of the component, but also another component may be present between the component and any component disposed on (or underneath) the component.

Also, it should be understood that, when a component is referred to as being "coupled to," "combined with" or "connected to" another component, the components may be directly coupled or connected to each other, but another component may be "present" between the respective components, or the respective components may be "coupled to," "combined with" or "connected to" each other through another component. In addition, when a part is referred to as being electrically coupled to another part, this includes not only the case where the parts are directly coupled to each other, but also the case where the parts are coupled to each other with another element therebetween.

When referred to as "A and/or B" throughout the description, it means A or B, or A and B unless otherwise stated to the contrary. In other words, "and/or" includes all or any combination of the listed items. When it comes to "C to D", it means that it is C or more and D or less, unless otherwise stated to the contrary.

The terms used herein are intended to describe embodiments and are not intended to limit the disclosure.

It should be understood that the disclosure is not limited to only the embodiments described herein but is also intended to cover various modifications and equivalent arrangements included within the present disclosure and the equivalent scope of the appended claims.

## Claims

1. An energy storage system (10) comprising:
a plurality of battery modules (110) each comprising a plurality of batteries (115);
a main spray tank (200) comprising a first fire extinguishing agent;
a pipe portion (300) connecting the main spray tank (200) to the plurality of battery modules (110); and
an additional spray tank (400) arranged in an area of the pipe portion (300) between the plurality of battery modules (110) and the main spray tank (200), wherein
the additional spray tank (400) comprises a second fire extinguishing agent.

2. The energy storage system (10) of claim 1, wherein
the additional spray tank (400) comprises:
a spray portion (410) configured to spray the second fire extinguishing agent into the pipe portion (300);
a tank portion (430) accommodating the second fire extinguishing agent; and
a fluidizer (450) passing through between the spray portion (410) and the tank portion (430) and configured to adjust the spray of the second fire extinguishing agent.

3. The energy storage system (10) of claim 2, wherein
the spray portion (410) comprises a vent portion (411) configured to block an end portion of the spray portion (410) and to rupture in that case that the first fire extinguishing agent is sprayed from the main spray tank (200).

4. The energy storage system (10) of claim 2 or 3, wherein
the tank portion (430) comprises a first tank neck portion (433) defining a tank hole (431) communicating between the tank portion (430) and the spray portion (410), and
a diameter of the fluidizer (450) corresponds to a diameter of the tank hole (431).

5. The energy storage system (10) of claim 4, wherein
the fluidizer (450) comprises a stopper (451) and a plug portion (453),
a diameter of the stopper (451) is greater than a diameter of the tank hole (431) and less than a diameter of the tank portion (430), and
a diameter of the plug portion (453) corresponds to the diameter of the tank hole (431).

6. The energy storage system (10) of claim 5, wherein
the plug portion (453) further comprises a spring portion (455) extending in a longitudinal direction of the plug portion (453) in a center of the plug portion (453),
the spring portion (455) is fixed to a second tank neck portion (435), and
a diameter of the spring portion (455) is less than the diameter of the plug portion (453).

7. The energy storage system (10) of claim 6, wherein
the second tank neck portion (435) comprises:
a spring fixing portion (436) to which the spring portion (455) is connected; and
a plurality of grid lines (437) connecting the spring fixing portion (436) to a diameter of the second tank neck portion (435).

8. The energy storage system (10) of any one of claims 1 to 7, wherein
the pipe portion (300) comprises a main pipe (310), a branch pipe (320), and a spray pipe (330), and
the additional spray tank (400) is arranged in an area of the main pipe (310).

9. The energy storage system (10) of any one of claims 1 to 8, wherein
the additional spray tank (400) is configured to spray the second fire extinguishing agent after the main spray tank (200) has at least partially depleted the first fire extinguishing agent.

10. The energy storage system (10) of any one of claims 1 to 9, wherein
the main spray tank (200) further comprises an inert gas.

11. A method for operating an energy storage system (10), the energy storage system comprising:
a plurality of battery (115) modules (110) each comprising a plurality of batteries (115);
a main spray tank (200) comprising a first fire extinguishing agent and an inert gas;
a pipe portion (300) connecting the main spray tank (200) to the plurality of battery (115) modules (110); and
an additional spray tank (400) arranged in a certain area of the pipe portion (300) and comprising a second fire extinguishing agent, the method comprising:
sequentially spraying the first fire extinguishing agent and the inert gas, and
spraying the second fire extinguishing agent together with the inert gas.

12. The method for operating the energy storage system (10) of claim 11, wherein the additional spray tank (400) comprises:
a spray portion (410) for spraying the second fire extinguishing agent into the pipe portion (300);
a tank portion (430) accommodating the second fire extinguishing agent; and
a fluidizer (450) passing between the spray portion (410) and the tank portion (430) for adjusting the spraying of the second fire extinguishing agent.

13. The method for operating the energy storage system of claim 11 or 12, wherein
the spray portion comprises a vent portion that ruptures when the first fire extinguishing agent is sprayed from the main spray tank, and
the vent portion is configured to block an end portion of the spray portion as long as the vent portion is not ruptured.

14. The method for operating the energy storage system of claim 12, wherein the tank portion comprises a tank neck portion defining a tank hole communicating between the tank portion and the spray portion, and
the fluidizer corresponds to the tank hole.

15. The method for operating the energy storage system (10) of any one of claims 11 to 14, wherein
the additional spray tank (400) is arranged in an area of the pipe portion (300) between the plurality of battery (115) modules (110) and the main spray tank (200).
